# EUROPÄISCHE PATENTSCHRIFT

(11) **EP 2 129 940 B1**
(45) Veröffentlichungstag und Bekanntmachung des Hinweises auf die Patenterteilung: **21.03.2012**
(21) Anmeldenummer: 07856894.6
(22) Anmeldetag: 19.12.2007
(51) Int. Cl.: F16H 57/04

(54) **GETRIEBE MIT SCHMIERÖLPUMPE UND GETRIEBE-BAUREIHE**
GEARBOX WITH LUBRICATING OIL PUMP AND GEARBOX RANGE
TRANSMISSION MUNIE D'UNE POMPE À HUILE LUBRIFIANTE ET GAMME DE TRANSMISSIONS

(30) Priorität: 26.01.2007 DE 102007004964
(43) Veröffentlichungstag der Anmeldung: 09.12.2009
(60) Teilanmeldung: 11006150.4
(73) Patentinhaber: SEW-EURODRIVE GmbH & Co. KG, 76646 Bruchsal (DE)
(72) Erfinder: GRUNDEL, Eugen, 76703 Kraichtal (DE)
(86) Internationale Anmeldenummer: PCT/EP2007/011171
(87) Internationale Veröffentlichungsnummer: WO 2008/089830

(56) Entgegenhaltungen:
- EP-A- 0 045 864
- EP-A- 0 342 183
- WO-A-03/069192
- US-A1- 2002 032 093
- US-A1- 2004 108 169

## Beschreibung

Die Erfindung betrifft ein Getriebe mit Schmierölpumpe und eine Getriebe-Baureihe und ein korrespondierendes Verfahren.

Bei Getrieben wird zur Verminderung der Reibungswärme und als Verschleißschufz Schmierstoff eingefüllt, der bei niedrigem Ölstand trotzdem an Lager und Verzahnungen herangeführt werden muss.

Aus der DE 101 43 929 A1 ist eine Getriebesteuervorrichtung bekannt, bei dem an einen Drehmomentwandler ein zusätzlicher Zahnradsatz vorgesehen ist, über den eine Ölpumpe antreibbar ist.

Aus der DE 199 50 967 A1 ist eine Getriebebauelnheit und eine Steuerplattform für den Einsatz in einer Getriebebaueinheit bekannt, wobei eine elektronische und eine hydraulische Steuervorrichtung im Getriebegehäuse und in unmittelbarer Nähe angeordnet sind.

Aus der DE 101 23 194 A1 sind ein Plattformgetriebe und ein Getriebebaukasten bekannt, bei dem eine Versorgungseinheit eine Pumpeinrichtung umfasst.

Aus der US 3 029 661 ist eine Allzweck-Untersetzungseinheit bekannt, bei dem mit Bolzen befestigte Stahlplatten ein Getriebegehäuse bilden.

Aus der DE 197 17 422 A1 ist ein Durchflusswächter bekannt, bei welchem ein in dem Fließweg einer Hydraulikflüssigkeit angeordnetes Widerstandselement von einer ersten in eine zweite Stellung bewegbar ist und mit einem elektrischen Kontakt in Verbindung bringbar ist.

Aus der gattungsbildendenEP 0 342 183 A2 ist eine Schmiereinrichtung für Verteilergetriebe eines Kraftfahrzeuges bekannt, bei welcher wenigstens ein Losrad auf einer zugleich eine

Schmiermittelpumpe treibenden Getriebeantriebswelle sitzt, wobei die Schmiermittelpumpe auf einer Seite des Getriebes fest vorgesehen ist, und bei welcher im Getriebegehäuse Fangtaschen für von den Zahnrädern abspritzendes Schmieröl vorgesehen sein, wobei oberhalb eine der Getriebeantriebswelle angeordnete Fangtasche über eine Längsbohrung und wenigstens eine Querbohrung mit einem Lager des bzw. der Losräder leitungsverbunden ist.

Aus der US 2004/0108169 A1 ist ein modularer Lagerkäfig mit Integrierter Schmiermittelpumpe bekannt, wobei eine Achsanordnung ein Achsgehäuse und ein eine Pumpe aufnehmendes Pumpengehäuse umfasst, wobei das Pumpengehäuse mit dem Achsgehäuse zur Abdeckung einer Öffnung in dem Achsgehäuse verbindbar ist und eine die Pumpe antreibende Welle in dem Pumpengehäuse abgestützt ist.

Aus der EP 0 045 864 A2 ist ein nachrüstbares getriebenes Schmiersystem bekannt, bei welchem eine Pumpe einen Pumpenkörper mit einer Schnittstelle hat, welche Schnittstelle identisch zu der Schnittstelle eines abnehmbaren Deckels ausgebildet ist, wobei die Pumpe statt des Deckels montiert und in Antriebsverbindung mit einer hinter dem Deckel angeordneten Welle gebracht werden kann. Die Pumpe weist einen Pumpeneingang und einen Pumpenausgang zum Anschluss einer externen Verrohrung auf.

Aus der US 2002/0032093 A1 ist eine Übersetzungssteuerungsmaschine bekannt, bei dem eine Schmiermittelpumpe einen Druckausgang aufweist, welcher in axiale Richtung in Bezug auf die Achse der Welle der Schmiermittelpumpe weist, und welcher an eine externe Verrohrung mit einem externen Ölkreislauf verbindbar ist.

Aus der WO 03/069192 A1 ist ein Schmiervorrichtung für Stufengetriebe bekannt, bei welcher eine Ölpumpe innerhalb eines Getriebegehäuses auf den gegenüberliegenden Enden einer Zwischenwelle montierbar ist, wobei die Ölpumpe so weit entfernt von den Wänden des Getriebegehäuses angeordnet wird, dass sie auch bei größerer Fahrzeugneigung Öl und nicht Luft saugt.

Der Erfindung liegt die Aufgabe zugrunde, ein Getriebe weiterzubilden, wobei das Getriebe kompakter und kostengünstiger sein soll.

Erfindungsgemäß wird die Aufgabe bei dem Getriebe nach den in Anspruch 1, bei der Baureihe nach den in Anspruch 13 und bei dem Verfahren nach den in Anspruch 15 angegebenen Merkmalen gelöst.

Wichtige Merkmale der Erfindung eines Getriebes mit einer Schmierölpumpe sind in Anspruch 1 angegeben. . Von Vorteil ist dabei, dass aufwendige Mechanik zum Antrieb der Schmierölpumpe, kurz Pumpe, einsparbar ist und eine separater Pumpenantrieb verzichtbar ist. Somit ist die Pumpe robust gegen funktionshindernde Beschädigungen, und eine zusätzliche elektrische Versorgung oder ein externer Anschluss an einen Kühlkreislauf kann entfallen.

Eine vorteilhafte Ausgestaltung ist in Anspruch 2 angegeben.

Bei einer vorteilhaften Ausgestaltung ist die Schmierölpumpe an einem Gehäusedeckel des Getriebes montiert, wobei der Gehäusedeckel ein Lager für die Welle des Getriebes zumindest teilweise abdeckt. Beispielsweise ist die Pumpe mit ihrem Pumpenflansch am Getriebe verbunden, wobei insbesondere die Welle der Pumpe koaxial mit einer Getriebewelle angeordnet ist. Somit ist vorteilhaft eine robuste Befestigung der Pumpe am Getriebe vornehmbar.

Bei einer vorteilhaften Auggestaltung ist die Welle des Getriebes die eintreibende Welle oder die erste Zwischenwelle. Von Vorteil Ist dabei, dass bei einem Getriebe mit Untersetzung eine hohe Drehzahl für die Pumpe verfügbar ist. Von Vorteil ist weiterhin, dass die Pumpe keinen eigenen Antrieb benötigt, also passiv arbeitet und nur bei Betrieb des Getriebes auch Schmieröl bewegt.

Bei einer vorteilhaften Ausgestaltung ist die Schmierölpumpe über den Gehäusedeckel an ein Verrohrungssystem des Schmierölkreislaufs angeschlossen. Eine externe, also außerhalb des Getriebegehäuses verlaufende, Verrohrung ist damit konsequent vermeidbar. Somit ist sogar die Anschluss-Verrohrung der Pumpe sicher geschützt ausführbar.

Bei einer vorteilhaften Ausgestaltung ist die Pumpe mit einem Verteiler verbunden, an welchem zumindest ein erster Sensor verbunden ist. Vorzugsweise ist ein Sensor mittels elektrischer Leitungen mit einer elektronischen Schaltung, insbesondere zum Auswerten der Sensorsignale, verbunden. Somit ist in kompakter Bauweise ein Mittel zur Überwachung der Pumpenfunktion und/oder des Pumpenzustands bereitgestellt. Eine Fernüberwachung ist vorsehbar, indem der Sensor elektronisch ausgelesen wird. Von Vorteil ist dabei, dass die Auswertung der Signale in geschützter Umgebung, wie Schaltschrank, erfolgen kann. Alternativ sind auch Sensoren verwendbar, die mit integrierter elektronischer Schaltung ausgeführt sind.

Bei einer vorteilhaften Ausgestaltung ist der erste Sensor ein Durchflusswächter und/oder ein Druckschalter. Mit einem Durchflusswächter ist nicht nur die Funktion der Pumpe, sondern zusätzlich die Funktion der Verrohrung überwachbar. Ein Druckschalter ist eine kostengünstige Vorrichtung zur zumindest binären Überwachung der Pumpenfunktion und der Durchlässigkeit der Verrohrung.

Bei einer vorteilhaften Ausgestaltung ist am Verteiler ein Filter und/oder ein zweiter Sensor, insbesondere zur Filterüberwachung, angeschlossen. Somit ist vorteilhaft Filterfunktion und Pumpfunktion in einer kompakten Vorrichtung bereitgestellt. Ferner ist selbst die Ölfilterung robust und kostengünstig überwachbar. Von Vorteil ist weiterhin, dass das Öl durch das Filter gereinigt werden kann und die Reinigungsfähigkeit des Filters überwachbar ist, insbesondere ist das Zusetzen des Filters detektierbar. Vorzugsweise umfasst das Filter ein Vlies.

Insgesamt ist mit der Erfindung eine Pumpe für einen Ölkreislauf bereitgestellt, die robust ist, eine geringe Ausfallrate aufweist, deren Funktion überwachbar ist und die keine zusätzliche Energieversorgung benötigt.

Bei einer vorteilhaften Ausgestaltung ist mindestens ein Sauganschlüss und mindestens ein Druckanschluss der Pumpe mit dem im Inneren des Getriebes vorgesehenen Rohrleitungssystem verbunden. Somit ist die Pumpe an einer internen Verrohrung verwendbar, wobei intern hier und im Folgenden im des von der Außenhaut des Getriebegehäuses umschlossenen Raumbereichs gelegen bezeichnet, also beispielsweise im Getriebeinneren oder in der Getriebewandung. Von Vorteil ist dabei, dass die Pumpe das Schmieröl ansaugen kann und am Druckausgang ins Rohrleitsystem einpressen kann. Dieses leitet dann das Öl, Insbesondere mittels Rohrvertellern, an die gewünschten Raumbereiche, insbesondere Schmierstellen. Durch die Ausbildung der Anschlüsse sind die Vorteile einer internen Rohrführung, also der Schutz gegen Beschädigung und ein kompaktes Baumaß, auch für die Pumpe als Teil des Ölkreislaufs nutzbar. Von Vorteil ist insbesondere, dass keine Ölleitungen im äußeren Bereich um das Getriebe herum vorhanden sind und somit auch nicht verletzbar sind. Die kompakte Einheit aus Verteiler und Pumpe mit Sensor Ist robust. Außerdem ist das Getriebe auf diese Weise mit einer Pumpe verbindbar, die an ihrer Oberfläche, beispielsweise einem als Getriebedeckel ausgebildeten Gehäusedeckel, vorsehbar ist.

Bei einer vorteilhaften Ausgestaltung weist oder.zeigt der Druckausgang in axiale Richtung in Bezug auf die Achse der Pumpenwelle- Mit weisen Ist hier und im folgenden die Richtung einer Normalen gemeint, die durch einen in etwa kreisförmigen Teil einer Ebene definiert wird, wobei der kreisförmige Teil durch die Öffnung der Druckausgangs berandet wird. Der Richtungssinn dieses Weisens ist als von innen nach außen an der Pumpe zu verstehen.

Bei einer vorteilhaften Ausgestaltung weist die Schmierölpumpe eine Pumprichtung auf, die unabhängig vom Drehsinn der Welle der Schmierölpumpe ist. Unter Pumprichtung ist die Fließrichtung des Schmieröls zwischen den Ausgängen, also Anschlüssen, der Schmierölpumpe zu verstehen. Die Pumpe Ist somit auf einer Welle des Getriebes montierbar, die im Betrieb in beiden Drehsinnen arbeitet. Die Förderrichtung oder Pumprichtung ist dabei unabhängig von dem Drehsinn der antreibenden Welle, also drehsinninvariant. Dies ist vorteilhaft durch eine Ventiltechnik an den Anschlüssen der Pumpe oder durch eine mechanische Umschaltvorrichtung in der Pumpe oder auf anderem Wege, beispielsweise mittels Kolbenpumpen, erreichbar.

Erfindungsgemäß weist die Pumpe einen ersten Anschluss erster Art und einen zweiten Anschluss erster Art auf, insbesondere zum Anschluss einer Ölkreislauf-Verrohrung, die derart symmetrisch zueinander angeordnet sind, dass bei Montage der Pumpe auf einer ersten Seite des Getriebes der erste Anschluss erster Art mit dem im Getriebeinneren vorgesehenen Rohrleitungssystem verbunden ist, wobei der zweite Anschluss erster Art verschlossen ist, und dass bei Montage der Pumpe auf einer zweiten seiten des Getriebes der zweite Anschluss erster Art mit dem im Getriebeinneren vorgesehenen Rohrleitungssystem verbunden ist, wobei der erste Anschluss erster Art verschlossen ist. Vorzugsweise weist die Pumpe zusätzlich einen Anschluss zweiter Art auf, der bei Montage der Pumpe auf jeder der beiden Seiten jeweils mit dem im Getriebeinneren vorgesehenen Rohrleitungssystem verbunden ist. In einer vorteilhaften Ausgestaltung sind die Anschlüsse erster Art als Druckanschlüsse ausgebildet, während der Anschluss zweiter Art als Sauganschluss ausgebildet ist. In einer alternativen, vorteilhaften Ausgestaltung sind die Anschlüsse erster Art als Sauganschlüsse ausgebildet, während der Anschluss zweiter Art als Druckanschluss ausgebildet ist. Beide Alternativen haben für sich den Vorteil, dass dieselbe Pumpe auf zwei Seiten des Getriebes montierbar ist. Dies erhöht die Variantenvielfalt, in der das Getriebe fertigbar ist. Durch die Ausbildung zweier Druckanschlüsse in der einen Ausgestaltung ist eine Pumpe bereitgestellt, bei der in beiden Montagepositionen immer der oberen Anschluss ein Sauganschluss ist, während der untere Anschluss ein Druckanschluss ist. Ein analoger Vorteil ergibt sich aus der alternativen Ausgestaltung.

Somit kann der robustere Sauganschluss im abhebbaren Teil eines Getriebegehäuses angeordnet werden, während der mit Druck beaufschlagte und daher empfindlichere Druckanschluss mit Verrohrung geschützt angeordnet werden kann.

Beieiner vorteil haften Ausgestaltung weist die Pumpe zwei Anschlüsse erster Art auf, die derart symmetrisch angeordnet sind, dass bei Montage der Pumpe auf der gegenüberllegenden Seite des Getriebes ein Anschluss erster Art verschlossen ist und der jeweils andere Anschluss erster Art für das Verbinden mit dem im Getriebeinneren vorgesehenen Rohrleitungssystem vorgesehen ist. Die Anschlüsse erster Art sind in vorteilhaften Ausgestaltungen entweder beide als Druckanschluss oder beide als Sauganschluss ausgebildet. Von Vorteil ist dass zusätzlich zu den Sauganschlüssen ein Druckanschluss bzw. zusätzlich zu den Druckanschlüssen ein Sauganschluss vorsehbar ist, und dass insbesondere bei einer 180° Symmetrie die relativen Höhen der jeweils verwendeten Saug- und Druck-Anschlüsse zueinander auch bei Verwendung der Pumpe auf der gegenüberliegenden Seite gleich bleiben und somit das Rohrleitungssystem nur geringfügig abgeändert werden muss. Außerdem bleibt die Montagereihenfolge gleich, wie auch die sonstigen Rahmenbedingungen.

Bei einer vorteilhaften Ausgestaltung sind erste und zweite Seite des Getriebes gegenüberliegende Seiten des Getriebes. Vorzugsweise ist somit die Pumpe bei Montage auf der ersten Seite und auf der zweiten Seite mit derselben Welle verbunden. Es macht somit keinen Unterschied für die Leistung, insbesondere die Drehzahl, der Pumpe, auf welcher Seite des Getriebes die Pumpe montiert wird, und die Auswahl kann sich allein an dem verfügbaren Platz orientieren.

Bei einer vorteilhaften Ausgestaltung ist die Pumpe über einen Gehäusedeckel mit dem Getriebe verbunden, wobei die Pumpe durch den Gehäusedeckel mit einem internen Ölkreislauf im Getriebegehäuse verbindbar ist. Alternativ oder zusätzlich ist die Pumpe über eine externe Verrohrung mit einem externen Ölkrelslauf verbindbar. Somit ist eine erhöhte Flexibilität bei der Auswahl der Einsatzmöglichkeiten für die Pumpe ermöglicht.

Bei einer vorteilhaften Ausgestaltung weist die Pumpe zwei interne Druckanschlüsse auf, deren Öffnungen auf das Getriebegehäuse hin weisen, zwei externe Druckanschlüsse, deren Öffnungen parallel zur Gehäuseoberfläche weisen, einen internen Sauganschluss, dessen Öffnung auf das Getriebegehäuse hin weist, und einen externen Sauganschluss, dessen Öffnung parallel zur Gehäuseoberfläche weist. Vorzugsweise weisen die internen Anschlüsse der Pumpe In axiale Richtung in Bezug auf die Pumpenwelle und die externen Anschlüsse der Pumpe in radiale Richtung in Bezug auf die Pumpenwelle. Somit sind die externen Anschlüsse einfach und platzsparend mit einer externen Verrohrung verbindbar, die entlang, als parallel zu, der Oberfläche des Getriebegehäuses geführt ist. Dabei beranden die Anschlussöffnungen ebene Flächen, deren Normalen die Richtung des jeweiligen Weisens definieren.

Die Begriffe intern und extern beziehen sich auf das Getriebegehäuse: Die externe Verrohrung ist außerhalb des Gehäuses angeordnet, während die interne Verrohrung im Inneren des Getriebes oder in der Wandung des Getriebegehäuses angeordnet ist.

Wichtige Merkmale bei der Erfindung einer Getriebe-Baureihe sind in Anspruch 13 angegeben. Insbesondere ist vorgesehen, dass Varianten umfasst sind, wobei in einer ersten Variante eine Schmierölpumpe an einem ersten Ende einer Getriebewelle angeordnet ist und durch die Getriebewelle angetrieben wird, und in einer zweiten Variante die Schmierölpumpe an einem zweiten Ende der Getriebewelle angeordnet ist und durch diese Getriebewelle angetrieben wird, wobei die Schmiarölpumpe jeweils an ein Verrohrungssystem für Schmleröl im Getriebeinneren angeschlossen ist.

Bei einer vorteilhaften Ausgestaltung ist in einer ersten Variante eine Schmierölpumpe an einem Deckel des Getriebegehäuses vorgesehen, wobei der Deckel ein Lager einer Getriebewelle, insbesondere der eintreibenden Welle, abdeckt und die Pumpe über den Deckel an ein Verrohrungssystem im Getriebeinneren angeschlossen ist, und wobei in einer zweiten Variante eine Schmierölpumpe an einem Deckel des Getriebegehäuses vorgesehen ist und die Pumpe baugleich zur Schmierölpumpe der ersten Variante ist, wobei die Schmierölpumpe an ein externes Verrohrungssystem angeschlossen ist. Von Vorteil ist dabei, dass an ein externes Verrohrungssystem beispielsweise eine Kühlvorrichtung und/oder einer Filtereinrichtung anschließbar ist.

Bei einer vorteilhaften Ausgestaltung ist in einer ersten Variante das Getriebegehäuse in monobloc-Bauweise ausgeführt und in einer zweiten Variante das Getriebegehäuse mindestens zweiteilig, wobei in beiden Varianten eine interne Ölkreislauf-Verrohrung vorgesehen ist und wobei die Getriebegehäuse der beiden Varianten im Wesentlichen identisch ausgeformt sind. Die Unterschiede zwischen beiden Gehäusen sind also nur durch die zweiteilige Ausführung einer Variante begründet. Somit können für eine Vielzahl von Ausformungen, Bohrungsflächen, Flanschflächen, Lagerschaten usw. Fertigungsschritte vereinheitlicht werden, und Fertigungswerkzeug ist einsparbar. Je nach Anwenderanforderungen ist die stabilere monobloc-Variante oder die leichter bei Wartung zugängliche zweiteilige Variante auswählbar. Insbesondere ist bei der monobloc-Variante eine Ausformung vorsehbar, aus der durch Aufschneiden oder Trennen die gegenseitig passenden Flansche der Gehäuseteile des Gehäuses fertigbar sind.

Bei einer vorteilhaften Ausgestaltung sind axial verschieden lange Pumpen am Pumpenflansch verbindbar. Somit ist die Variantenvielfalt der Baureihe nochmals gesteigert. Es sind verschiedene Filtergrößen und/oder verschiedene Pumpenleistungen, insbesondere Durchflussmengen, verfügbar. Insbesondere ist vorteilhaft eine Baureihe von Pumpen verwirklichbar, indem einzelne Bauteile der Pumpe, beispielsweise das Filtergehäuse, der Verteiler und/oder das Pumpengehäuse, variiert werden. Vorzugsweise ist ein Flansch vorgesehen, der mit dem Getriebe verbindbar ist und auf den verschieden lange Gehäuse der Pumpe aufsetzbar sind. Somit ist eine Schnittstelle geschaffen, die eine hohe Varianz von Pumpen bei Verwendung immer desselben Flansches ermöglicht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der

### Bezugszeichenliste

- 1, 10: Pumpe
- 2, 14: erster Sensor
- 3, 13: zweiter Sensor
- 4, 11: Verteilerflansch
- 5, 12: Filter
- 15: Getriebe
- 16,21: Gehäusedeckel
- 22,: 23 Bohrung
- 24: Welle
- 25: Bohrung
- 30: Pumpe
- 31: Flanschplatte
- 32: Pumpenflansch
- 32a: Pumpenflansch in erster Bauform
- 32b: Pumpenflansch in zweiter Bauform
- 34a: erster externer Druckanschluss
- 34b: zweiter externer Druckanschluss
- 36: externer Sauganschluss
- 38: Entlüftungsbohrloch
- 39: Verteiler
- 40: Filter
- 42: Filterüberwachung
- 44: Sensoranschluss
- 46: Ölabfassschraube
- 48: Ölablassschraube
- 49: Pumpendeckel
- 50: Pumpenwelle
- 52: Bohrung
- 54: interner Sauganschluss
- 56a: erster interner Druckanschluss
- 56b: zweiter interner Druckanschluss
- 58: Verbindungskanal
- 60: Verbindungskanal
- 62: Befestigungsschraube
- 64: Schraubenloch
- 70a: Pumpe in erster Bauform
- 70b: Pumpe in zweiter Bauform
- 72: Zwischenraum
- 60: Richtung des Schwerefelds der Erde
- 601: obere Gehäuseschale
- 602: untere Gehäuseschale
- 603: erste Welle
- 604: zweite Welle
- 605: dritte Welle
- 606: erstes Lager
- 607: zweites Lager
- 608: drittes Lager
- 609: viertes Lager
- 610: erstes Zahnrad
- 611: zweites Zahnrad
- 612: drittes Zahnrad
- 613: viertes Zahnrad
- 620: Pumpe
- 621: Saugrohr
- 622: Ölsumpf
- 623: Druckrohr
- 624: Verrohrungsverteiler
- 625: erstes Versorgungsrohr
- 626: zweites Versorgungsrohr
- 627: drittes Versorgungsrohr
- 628: Düse

Die Erfindung wird nun anhand von Abbildungen näher erläutert:

Es zeigt
- Figur 1 ein Getriebegehäuse mit montierter Schmierölpumpe,
- Figur 2 eine Prinzipskizze einer Schmierölpumpe mit Filter und Sensoren,
- Figur 3 eine Schmierölpumpe mit Pumpenflansch und Filter,
- Figur 4 eine teilweise Explosionsdarstellung der Schmierölpumpe aus Figur 3,
- Figur 5 unterschiedliche Bauformen der Schmierölpumpe aus Figur 3 und
- Figur 6 eine Prinzipskizze eines Getriebes mit Schmierölpumpe und Ölkreislauf-Verrohrung.

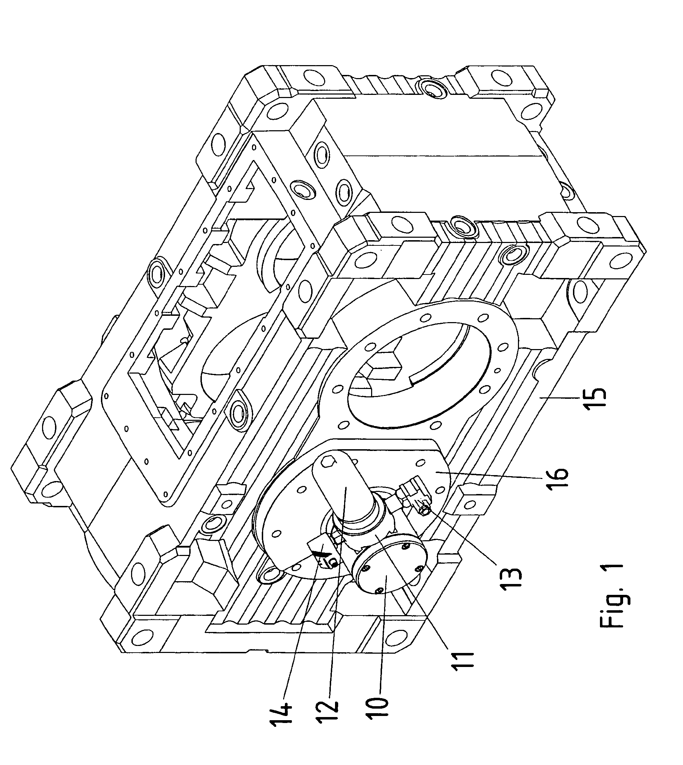

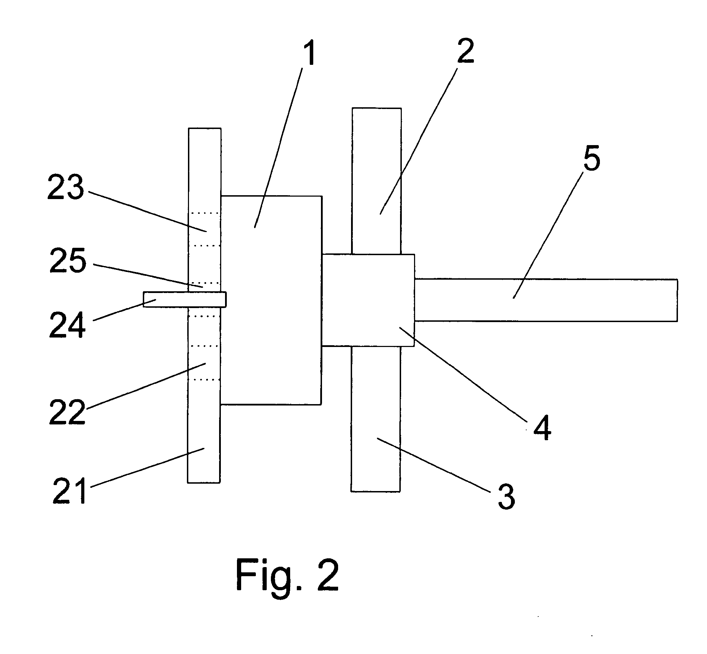

In der Figur 2 ist ein erfindungsgemäßes System symbolisch gezelgt. In Figur 1 Ist ein konkretisiertes System an einem Getriebe gezeigt.

Vorteilhaft ist, dass keine Ölleitungen im Außenbereich des Getriebes um das System herum vorzusehen sind. Denn das System wird an einem Getriebedeckel 16 eingebracht und mit dem Rohrleitungssystem des Getriebeinneren verbunden durch diesen Getriebedeckel 16 hindurch verbunden.

Das System ist in Figur 2 dargestellt. Eine Pumpe 1 ist an einem Gehäusedeckel 21 eines Getriebegehäuses montiert. Die Pumpe 1 saugt Öl an ihrem Sauganschluss über eine Bohrung 22 und drückt dieses heraus an ihrem Druckausgang über eine Bohrung 23, zurück in das Getriebeinnere. Der an der Pumpe 1 vorgesehen Verteilerflansch 4 erübrigt weitere äußere Druckleitungen und ermöglicht das direkte Anschließen von Sensoren und Filtern. Die Pumpe 1 ist mit einer Welle 24 des Getriebes verbunden, die durch eine Bohrung 25 Im Gehäusedeckel 21 hindurch die Pumpe 1 antreibt. In der Endfläche der Pumpenwelle sind auf einem Durchmesser der Welle zwei nicht gezeigte, axial ausgerichtete Stifte angeordnet, die in entsprechend ausgebildete Bohrungen in der Getriebewelle 24 eingreifen und somit eine Formschluss zum Antrieb der Pumpe 1 bewirken.

Insbesondere ist ein erster Sensor 2 und ein zweiter Sensor 3 vorgesehen, wobei der erste beispielhaft als Durchflusswächter und der zweite als Filterüberwachung ausgeführt ist, der die Funktionstüchtigkeit des ebenfalls an den Verteilerflansch 4 angeschlossenen Filters 5 überwacht. Wenn das Filter zunehmend verstopft ist, gibt dieser zweite Sensor 3 also ein entsprechendes Signal ab an eine verbundene elektronische Schaltung.

Der Sensor 3 vergleicht den Öldruck des ins Filter 5 einströmenden Öls mit dem aus diesem herausströmenden Öl. Übersteigt die Druckdifferenz einen kritischen Wert, wird das Signal ausgelöst oder der Wert gemeldet. Alternativ wird der Wert ständig gemessen und in regelmäßigen Zeitabständen an eine übergeordnete elektronische Schaltung gemeldet.

Der Sensor 2 detektiert den Dürchfluss und meldet die Werte an eine übergeordnete elektronische Schaltung oder er löst ein Signal aus, wenn der Durchfluss unter einen kritischen Wert fällt.

In Figur 1 sind die in Figur 2 genannten Teile konkretisiert ausgeführt und an ein Getriebe verbunden.

Die Pumpe 10 ist also nun als kompakte Einheit ausgeführt und kann direkt an ein Getriebe angeschlossen werden. Es entfallen externe Leitungen, die empfindlich sein können.

Der erste Sensor 14 und der zweite Sensor 13 sind am Verteilerflansch 11 vorgesehen, an dem auch das Filter 12 vorgesehen ist. Das Getriebe 15 weist also einen Gehäusedeckel 16 auf, in welchem das System einbaubar ist. Im Gegensatz zur Figur 2 sind in Figur 1 Verteilerflansch 11, Sensoren (13, 14) und Filter 12 in etwa in einer Ebene angeordnet, die parallel zu der Gehäusewand verläuft.

In weiteren erfindungsgemäßen Ausführungsbeispielen sind als Sensoren Vorrichtungen vorgesehen, die nach anderen Messprinzipien arbeiten.

In weiteren erfindungsgemäßen Ausführungsbeispielen sind die bloßen Sensoren mittels elektrischer Leitungen mit jeweiligen Auswerteschaltungen verbunden, die entfernt vom Getriebe vorgesehen sind, beispielsweise im Schaltschrank.

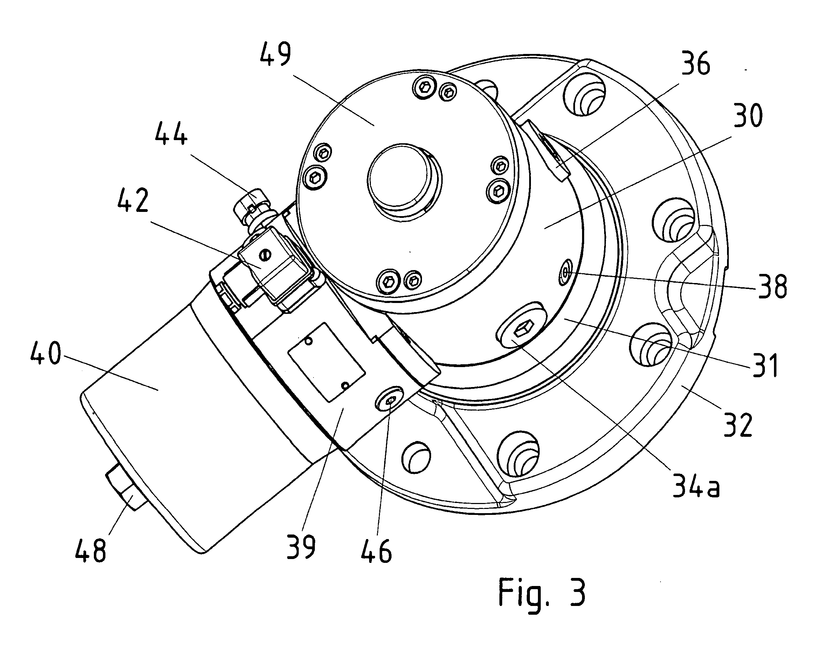

Figur 3 zeigt ein weiteres erfindungsgemäßes Ausführungsbeispiel. Eine Pumpe 30 ist über eine Flanschplatte 31 mit einem Pumpenflansch 32 verbunden. Der Pumpenflansch ist auf einem nicht gezeigten Getriebedeckel angebracht. Das Gehäuse der Pumpe 30 weist einen ersten externen Druckanschluss 34a, einen zweiten externen Druckanschluss 34b, einen externen Sauganschluss 36 und eine Entlüftungsbohrung 38 auf, die jeweils mittels Schrauben verschlossen sind. Ein Pumpendeckel 49 schließt die Pumpe 30 axial ab.

Die Begriffe extern und intern beziehen sich auf die Möglichkeit eines Anschlusses an eine externe, also außerhalb eines Getriebes gelegenen, Verrohrung bzw einer internen, also innerhalb eines Getriebes oder in der Wandung das Gehäuses angeordneten.

Mit der Pumpe 30 ist ein Verteiler 39 verbunden, an dem ein Filter 40, ein Anschluss zur Fllterüberwachung 42 und ein Sensoranschluss 44 für einen Durchflusswachter angebracht sind. Eine Ölablassschraube 46 verschließt eine Ölablassbohrung. Eine weitere Ölablassschraube 48 ist am Filter 40 vorgesehen.

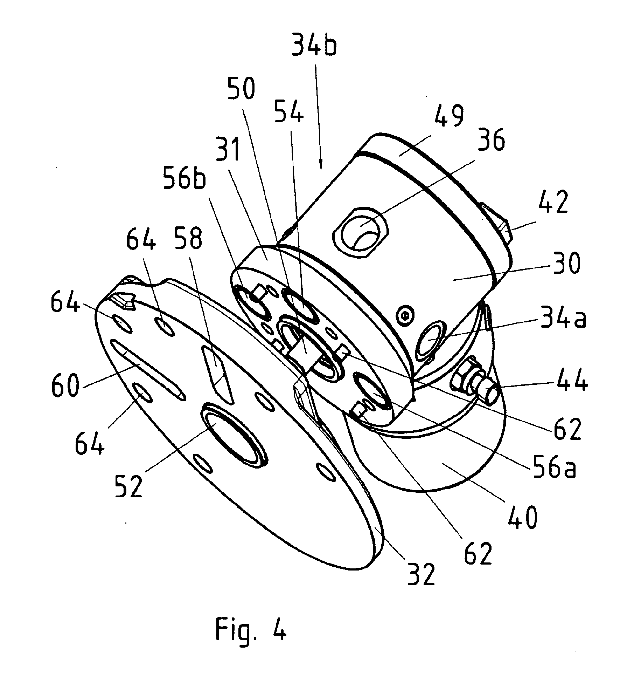

Figur 4 zeigt eine andere Ansicht desselben Ausführungsbeispiels in teilweiser Explosionsdarstellung. Die Pumpenwelle 50 der Pumpe 30 ist im montierten Zustand durch einen Bohrung 52 mit einer Getriebewelle verbunden. Diese Getriebewelle ist vorzugsweise die eintreibende Getriebewelle.

Die Flanschplatte 31 weist einen Internen Sauganschluss 54, einen ersten internen Druckanschluss 56a und einen zweiten internen Druckanschluss 56b auf. Der interne Sauganschiuss 54 wird bei Aufsetzen der Flanschplatte 31 auf den Pumpenflansch 32 mit einer Bohrung zur Deckung gebracht, die in einen Verbindungskanal 58 mündet. Der erste interne Druckanschluss 56a wird bei Aufsetzen der Flanschplatte 31 auf den Gehäusedeckel 32 mit einer Bohrung zur Deckung gebracht, die in einen Verbindungskanal 60 mündet. Der zweite interne Druckanschluss 56b wird bei Aufsetzen der Flanschplatte 31 auf den Pumpenflansch 32 durch den Pumpenflansch 32 dicht verschlossen. Der Pumpenflansch 32 ist auf einem nicht gezeigten Getrlebedeckel montiert. Die Verbindungskanäle (58, 60) münden durch diesen In eine Ölumlauf-Verrohrung, deren Enden in zu den Verbindungskanälen (58, 60) passende Bohrungen eingerollt sind.

Die Verbindungskanäle (58, 60) sind somit mit Anschlüssen einer internen Verrohrung im Getriebegehäuse verbindbar. Durch die langlochförmige Ausbildung der Verbindungskanäle (58, 60) ist ein und der derselbe Pumpenflansch 32 auf verschiedene Getriebegehäuse, insbesondere verschiedene Getriebedeckel, die sich durch den relativen Abstand der Verrohrungsanschlüsse unterscheiden, montierbar. Somit ist ein und derselbe Pumpenflansch an verschiedenen Getriebegrößen, die sich insbesondere durch ihre Lagerdurchmesser voneinander unterscheiden, einsetzbar.

Befestigungsschrauben 62 sichern die Flanschplatte 31 relativ zum Pumpenflansch 32 gegen ein Verdrehen und fixieren die Pumpe 30 auf dem Pumpenflansch 32.

Über Schraubenlöcher 64 ist der Pumpenflansch 32 mittels Schrauben mit dem Getriebegehäuse verbindbar.

Über einen externen Sauganschluss 36 und einen ersten externen Druckanschluss 34a ist ein zumindest teilweise außerhalb des Getriebegehäuses verlaufender Ölkreislauf anschließbar. Ein solcher externer Anschluss ist insbesondere erforderlich, wenn eine zusätzliche Ölkühlung erforderlich ist. Zum Anschluss einer externen Verrohrung wird jeweils die in Fig. 3 gezeigte Verschlussschraube herausgenommen.

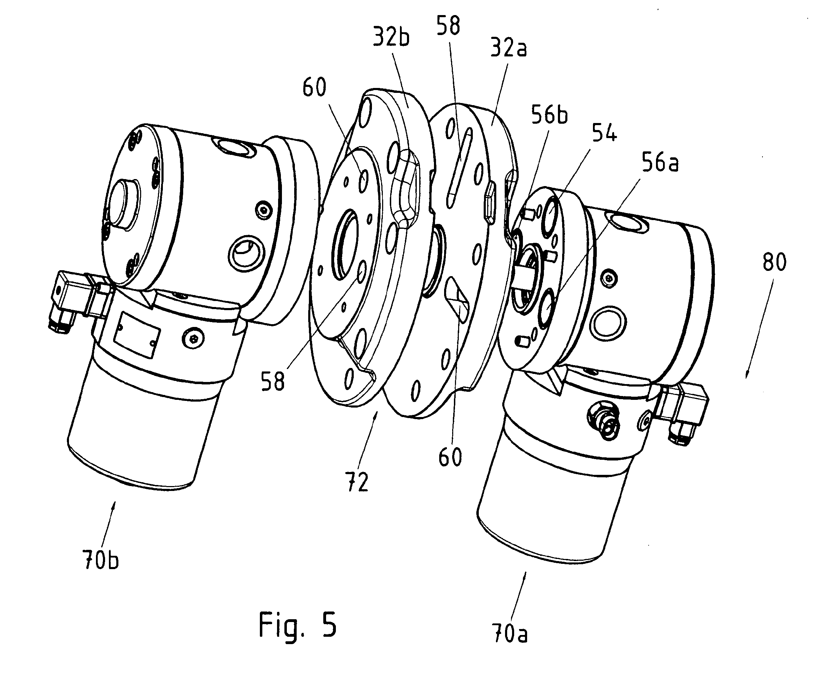

Figur 5 zeigt das Prinzip der zweiseitigen Montage der Wellenpumpe mit Filter. Das Getriebegehäuse ist gedanklich zwischen dem Pumpenflansch in erster Bauform 32a und dem Pumpenflansch in zweiter Bauform 32b im Zwischenraum 72 anzuordnen.

Unter Bauform eines Gegenstandes wird in dieser Schrift die Orientierung zweier, vorzugsweise senkrecht aufeinander stehender, mathematisch-gedachter, im Gegenstand in Arbeitsposition angeordneter Achsen bezüglich des als homogen genäherten Schwerefelds der Erde verstanden. Beispielsweise sind derartige Achsen bei einem Getriebe durch die Richtung der eintreibenden Welle und eine senkrecht auf dieser und einer Gehäusewand stehenden Achse gegeben. Beispielsweise sind derartige Achsen bei einer Pumpe mit Filter nach Figur 3 durch die Richtung der Pumpenwelle und die Symmetrieachse des Filters gegeben.

In einer ersten Bauform ist die Pumpe 70a mit dem Pumpenflansch 32a derart verbunden, dass ein erster Verbindungskanal 58 im Pumpenflansch 32a mit dem internen Sauganschluss 54 der Pumpe 70a verbunden ist, dass ein zweiter Verbindungskanal 60 im Gehäusedeckel 32a mit dem ersten internen Druckanschluss 56a und dass der zweite interne Druckanschluss 56b durch den Gehäusedeckel 32a dicht verschlossen wird,

In einer zweiten Bauform ist die Pumpe 70b mit dem Pumpenflansch 32b derart verbunden, dass der zweite Verbindungskanal 60 im Pumpenflansch 32b mit dem internen Sauganschluss 54 der Pumpe 70a verbunden ist, dass der erste Verbindungskanal 58 im Pumpenflansch 32a mit dem zweiten internen Druckanschluss 56b und dass der erste interne Druckanschluss 56a durch den Pumpenflansch 32b dicht verschlossen wird.

Die Verbindungskanäle (58, 60) sind mit je einem Anschlussrohr der internen Verrohrung des Getriebes verbunden.

Somit wird in beiden Bauformen mit demselben Purnpenflansch (32a, 32b) und derselben Pumpe (70a, 70b) der Sauganschluss 54 jeweils mit dem bezüglich des Schwerefelds der Erde 80 oberen Anschlussrohr der internen Verrohrung verbunden. Somit sind unterschiedliche Bauformen mit einem reduzierten Teilesortiment bereitstellbar.

Wie in Figur 4 gezeigt, weist die Pumpe 30 weiterhin einen zweiten externen Druckanschluß 34b auf. Dieser wird verwendet bei einer Montage der Pumpe 30 in einer zweiten Bauform und mit zumindest teilweise externer Verrohrung, und zwar in entsprechender Weise wie in Figur 5 gezeigt. Es entspricht also beispielsweise die Verwendung des ersten externen Druckanschluss 34a aus Figur 4 der Verwendung des ersten internen Druckanschlusses 56a in Figur 5, die Verwendung des zweiten externen Druckanschluss 34b aus Figur 4 der Verwendung des zweiten internen Druckanschlusses 56b in Figur 5, die Verwendung des externen Sauganschluss 36 aus Figur 4 der Verwendung des internen Sauganschlusses 54 in Figur 5.

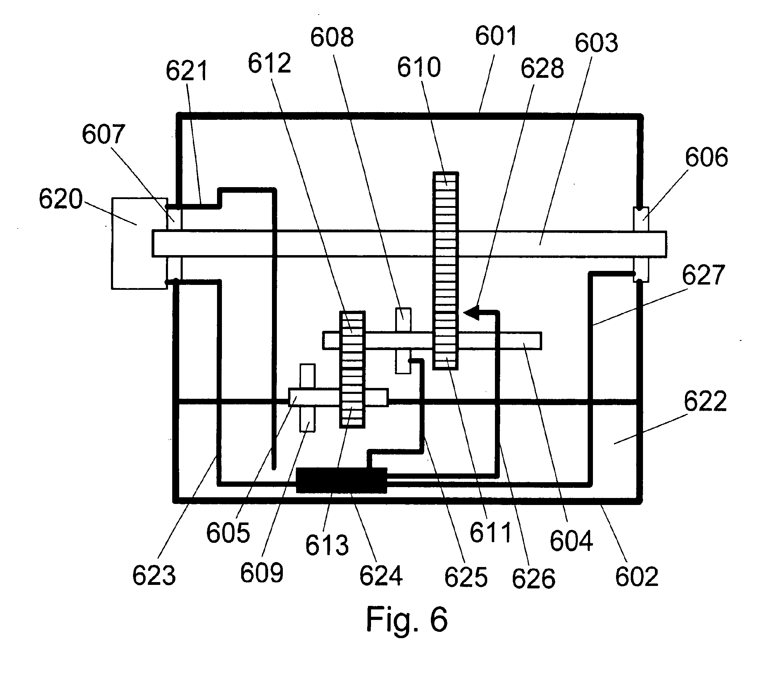

Figur 6 zeigt schematisch ein erfindungsgemäßes Ausführungsbeispiel eines Getriebes mit Wellenpumpe und interner Verrohrung.

Das Getriebegehäuse umfasst eine erste Gehäuseschale 601 und eine zweite Gehäuseschale 602. Das Getriebe umfasst eine erste Welle 603, eine zweite Welle 604 und eine dritte Welle 605, auf denen wie gezeigt ein erstes Zahnrad 610, ein zweites Zahnrad 611, ein drittes Zahnrad 612 und ein viertes Zahnrad 613 vorgesehen sind. Die Wellen sind zumindest durch ein erstes Lager 606, ein zweites Lager 607, ein drittes Lager 608 und ein viertes Lager 609 festgelegt und/oder gelagert.

Die Anordnung der Wellen, Zahnräder und Lager relativ zueinander und bezüglich der Gehäuseschalen (610, 620) ist lediglich schematisch zur Verdeutlichung des Funktionsprinzips dargestellt. Der Fachmann wird gegebenenfalls routinemäßig weitere, nicht gezeigte Lager und weitere Zahnräder und weitere Wellen und/oder diese in einer anderen Anordnung vorsehen, um weitere erfindungsgemäße Ausführungebeispiele bereitzustellen.

Die erste Welle 603 in Figur 6 ist eine entreibende Welle des Getriebes.

An der ersten Welle 603 ist eine Pumpe 620 montiert, die von der Welle 603 angetrieben wird. Die Pumpe 620 ist als Wellenpumpe ausgebildet und dient als Ölumwälzpumpe.

Die Pumpe 620 ist mit einem Saugrohr 621 verbunden, das in einen Ölsumpf 622 ragt. Die Pumpe 620 ist über ein Druckrohr 623 mit einem Verrohrungsverteiler 624 verbunden. Somit pumpt die über die erste Welle 603 angetriebene Pumpe 620 Öl aus dem Ölsumpf 622 an den Verrohrungsverteiler 624.

An den Verrohrungsverteiler 624 ist zumindest ein erstes Versorgungsrohr 625, ein zweites Versorgungsrohr 626 und ein drittes Versorgungsrohr 627 angeschlossen, durch die das an den Verrohrungsverteiler 624 gepumpte Öl weitergeleitet wird.

Der Verrohrungsverteiler 624 ist also zur Verteilung von Öl vorgesehen.

Das erste Versorgungsrohr 625 endet im dritten Lager 608, wodurch Öl zur Schmierung des dritten Lagers 608 bereitgestellt wird.

Das zweite Versorgungsrohr 626 endet in einer Düse 628, durch die Öl in den Zahneingriff des ersten Zahnrads 610 mit dem zweiten Zahnrad 611 gespritzt wird.

Das dritte Versorgungsrohr 627 endet im ersten Lager 606, das im Getriebegehäuse festgelegt ist. Durch das dritte Versorgungsrohr 627 wird somit das erste Lager 606 geschmiert.

Weitere Versorgungsrohre sind vorgesehen, aber aus Gründen der Übersichtlichkeit nicht gezeigt. Die dritte Welle 605, das vierte Lager 609 und das vierte Zahnrad 613 tauchen jeweils teilweise in den Ölsumpf 622 ein. Die genannten Teile (605, 609, 613) werden somit direkt aus dem Ölsumpf 622 mit Schmieröl versorgt. Das vierte Zahnrad 613 versorgt über den gemeinsamen Zahneingriff das dritte Zahnrad 612 mit Schmieröl aus dem Ölsumpf 622.

Durch die Ausgestaltung nach Figur 5 ist zum einen die gesamten Verrohrung zur Ölschmierung Im Getriebegehäuse und damit gegen unbeabsichtigte Beschädigung geschützt angeordnet, zum anderen die obere Gehäuseschale 601 abnehmbar, ohne den mit Druck beaufschlagten, empfindlichen Teil der Verrohrung, umfassend zumindest Druckrohr 623, Verrohrungsverteiler 624 und Versorgungsrohre (625, 626, 627), demontieren zu müssen. Insbesondere ist nach Abnehmen der oberen Gehäuseschale 601 höchstens das einfach und robust ausgeführte Saugrohr 621 von Hand neu zu justieren.

In einem weiteren Ausführungsbeispiel ist das Getriebegehäuse als monobloc-Variante, also elnteilig, ausgeführt. Dabei wird vorteilhaft die Anordnung von Bohrungen für Wellen oder Verrohrungsanschlüsse oder andere Durchführungen und/oder Montagepunkte identisch zur Variante mit geteiltem Gehäuse gewählt. Somit sind die Getriebegehäuse der monobloc-Variante und der oben beschriebenen zweiteiligen Variante im Wesentlichen identisch. Beide Gehäuse unterscheiden sich lediglich in den Details, die mit der Zweiteiligkeit unmittelbar zusammenhängen, beispielsweise eine Schnittfläche mit Bohrungen für Schrauben, Dichtmittel usw. Somit sind viele Fertigungsschritte und Bedienungsschritte für beide Varianten gleich ausführbar.

In weiteren erfindungsgemäßen Ausführungsbeispielen weist die Pumpe einen Sauganschluss und zwei Druckausgänge auf, wobei die Ausgänge symmetrisch zur Pumpenachse angeordnet sind. Somit kann dann der Getriebedeckel mit dem System zusammen auf der gegenüberliegenden Seite des Getriebes vorgesehen werden und dabei der andere Ausgang für das im Getriebeinneren vorgesehene Leitungssystem vorgesehen werden. Das Leitungssystem muss dabei nur unwesentlich geändert werden und die Montage kann in gleicher Art erfolgen. Somit ist dergleiche Deckel mit System am Getriebe wiederverwendbar.

In weiteren erfindungsgemäßen Ausführungsbelspielen weist die Pumpe einen Flansch zum Getriebe hin auf und kann durch eine andere Pumpe ersetzt werden, die am gleichen Flansch anmontierbar ist. Auf diese Weise sind verschiedene Pumpen, insbesondere axial verschieden lange Pumpen realisierbar. Somit ist je nach Drehzahl der die Pumpe antreibenden Welle oder je nach benötigter Durchtlussmenge eine größere oder kleinere Pumpe verbindbar.

In weiteren erfindungsgemäßen Ausführungsbeispielen ist die Pumpe verbunden und angetrieben von der eintreibenden Welle oder der ersten Zwischenwelle des Getriebes. Somit ist nur eine kleine Pumpe notwendig, da eine hohe Drehzahl der Pumpe vorliegt.

Unter Öl werden bei der Erfindung auch andere flüssige Schmierstoffe verstanden, beispielsweise Schmierfett, dessen Viskosität bei Betriebstemperatur der einer Flüssigkeit gleicht und das somit pumpbar ist.

## Patentansprüche

1. Getriebe (15) mit einer Schmierölpumpe (1, 10, 70a, 70b, 620),
wobei eine Welle (24, 603, 604, 605) der Getriebes (15) eine die Schmierölpumpe (1, 10, 70a, 70b, 620) antreibende Welle (603) ist, insbesondere dass die Welle (24, 603, 604, 605) der Schmierölpumpe (1, 10, 70a, 70b, 620) koaxial zu einer Welle (24, 603, 604, 605) angeordnet ist, die von einer Stufe des Getriebes (15) umfasst wird, insbesondere von dem Getriebestrang umfasst ist, der eine eintreibende und eine abtreibende Welle (603, 605) des Getriebes (15) verbindet,
**dadurch gekennzeichnet, dass**
die Schmierölpumpe (1, 10, 70a, 70b, 620) einen ersten Anschluss erster Art (56a, 56b) und
einen zweiten Anschluss erster Art (56a, 56b) aufweist, die derart symmetrisch zueinander angeordnet sind, dass bei Montage der Schmierölpumpe (1, 10, 70a, 70b, 620) auf einer ersten Seite des Getriebes (15) der erste Anschluss erster Art (56a, 56b) mit dem im Getriebeinneren vorgesehenen Rohrleitungssystem (621, 623, 624, 625, 626, 627, 628) verbunden ist, wobei der zweite Anschluss erster Art (56a, 56b) verschlossen ist, und dass bei Montage der Schmierölpumpe (1, 10, 70a, 70b, 620) auf einer zweiten Seiten des Getriebes (15) der zweite Anschluss erster Art (56a, 56b) mit einem im Getriebeinneren vorgesehenen Rohrleitungssystem (621, 623, 624, 625, 626, 627, 628) verbunden ist, wobei der erste Anschluss erster Art (56a, 56b) verschlossen ist.

2. Getriebe (15) nach Anspruch 1 oder 2,
**dadurch gekennzeichnet, dass**
die Schmierölpumpe (1, 10, 70a, 70b, 620) an einem Gehäusedeckel des Getriebes (15) montiert ist,
wobei der Gehäusedeckel (16, 21) ein Lager für die Welle (24, 603, 604, 605) des Getriebes (15) zumindest teilweise abdeckt.

3. Getriebe (15) nach mindestens einem der vorangegangenen Ansprüche, **dadurch gekennzeichnet, dass**
die Welle (24, 603, 604, 605) des Getriebes (15) die eintreibende Welle (603) oder die erste Zwischenwelle (604) ist,
und/oder dass
die Schmierölpumpe (1, 10, 70a, 70b, 620) über den Gehäusedeckel (16,21) an eine Ölkreislauf-Verrohrung (621, 623, 624, 625, 626, 627, 628) angeschlossen ist,
und/oder dass
die Schmierölpumpe (1, 10, 70a, 70b, 620) mit einem Verteiler (4, 11) verbunden ist, an welchem zumindest ein erster Sensor (2, 3, 13, 14) verbunden ist.

4. Getriebe (15) nach mindestens einem der vorangegangenen Ansprüche,
**dadurch gekennzeichnet, dass**
der erste Sensor (2, 3, 13, 14) ein Durchftusswächter und/oder ein Druckschalter ist und/oder
dass am Verteiler (4, 11) ein Filter und/oder ein zweiter Sensor (2, 3, 13, 14), insbesondere zur Filterüberwachung, angeschlossen ist.

5. Getriebe (15) nach mindestens einem der vorangegangenen Ansprüche,
**dadurch gekennzeichnet, dass**
die Schmierölpumpe (1, 10, 70a, 70b, 620) mit ihrem Pumpenflansch am Getriebe (15) verbunden ist, wobei insbesondere die Welle (24. 603, 604. 605) der Schmierölpumpe (1, 10, 70a, 70b, 620) koaxial mit einer Welle (24, 603, 604, 605) des Getriebes (15) angeordnet ist,
und/oder dass
mindestens ein Sauganschluss (36, 54) und mindestens ein Druckanschluss (34a, 34b, 56a, 56b) der Schmierölpumpe (1, 10, 70a, 70b, 620) mit dem im Inneren des Getriebes (15) vorgesehenen Rohrleitungssystem (621, 623, 624, 625, 626, 627, 628), insbesondere mit einer internen Ölkreislauf-Verrohrung, verbunden ist,
und/oder dass
der Druckausgang (34a, 34b) in axiale Richtung in Bezug auf die Achse der Welle (24, 603, 604, 605) der Schmierölpumpe (1, 10, 70a, 70b, 620) weist.

6. Getriebe (15) nach mindestens einem der vorangegangenen Ansprüche,
**dadurch gekennzeichnet, dass**
ein Sensor (2, 3, 13, 14) mittels elektrischer Leitungen mit einer elektronischen Schaltung,
insbesondere zum Auswerten der Sensorsignale, verbunden ist,
und/oder dass
axial verschieden lange Schmierölpumpen (1, 10, 70a, 70b, 620) am Pumpenflansch verbindbar sind,
und/oder dass
die Schmierölpumpe (1, 10, 70a, 70b, 620) eine Pumprichtung aufweist, die unabhängig vom Drehsinn der Welle (24, 603, 604, 605) der Schmierölpumpe (1, 10, 70a, 70b, 620) ist.

7. Getriebe (15) nach mindestens einem der vorangegangenen Ansprüche,
**dadurch gekennzeichnet, dass**
die Schmierölpumpe (1, 10, 70a, 70b, 620) einen ersten Anschluss erster Art (56a, 56b) und einen zweiten Anschluss erster Art (56a, 56b) aufweist, die derart symmetrisch zueinander angeordnet sind, dass bei Montage der Schmierölpumpe (1, 10, 70a, 70b, 620) auf einer ersten Seite des Getriebes (15) der erste Anschluss erster Art (56a, 56b) mit dem Im Getriebeinneren vorgesehenen Rohrleitungssystem (621, 623, 624, 625, 626, 627, 628) verbunden ist, wobei der zweite Anschluss erster Art (56a, 56b) verschlossen ist, und dass bei Montage der Schmierölpumpe (1, 10, 70a, 70b, 620) auf einer zweiten Seiten des Getriebes (15) der zweite Anschluss erster Art (56a, 56b) mit einem im Getriebeinneren vorgesehenen Rohrleitungssystem (621, 623, 624, 625, 626, 627, 628) verbunden ist, wobei der erste Anschluss erster Art (56a, 56b) verschlossen Ist,
und/oder dass
die Schmierölpumpe (1, 10, 70a, 70b, 620) einen Anschluss zweiter Art (36, 54) aufweist, der bei Montage der Schmierölpumpe (1, 10, 70a, 70b, 620) auf jeder der beiden Seiten jeweils mit dem im Getriebeinneren vorgesehenen Rohrleitungssystem (621, 623, 624, 625, 626, 627, 628), insbesondere mit einer Ölkreislauf-Verrohrung, verbunden ist,
und/oder dass
die Anschlüssen erster Art (56a, 56b) Druckanschlüsse sind,
und der Anschluss zweiter Art (36, 54) ein Sauganschluss ist,
und/oder dass
die Anschlüsse erster Art Sauganschlüsse sind,
und der Anschluss zweiter Art ein Druckanschluss ist.

8. Getriebe (15) nach mindestens einem der vorangegangenen Ansprüche,
**dadurch gekennzeichnet, dass**
erste und zweite Seite des Getriebes (15) gegenüberliegende Seiten des Getriebes (15) sind und/oder
dass die Schmierölpumpe (1, 10, 70a, 70b, 620) bei Montage auf der ersten Seite und auf der zweiten Seite mit derselben Welle (24, 603, 604, 605) verbunden ist.

9. Getriebe (15) nach mindestens einem der vorangegangenen Ansprüche,
**dadurch gekennzeichnet, dass**
die Schmierölpumpe (1, 10, 70a, 70b, 620) über einen Gehäusedeckel (16, 21) mit dem Getriebe (15) verbunden ist,
wobei die Schmierölpumpe (1, 10, 70a, 70b, 620) durch den Gehäusedeckel mit einer internen Ölkreislauf-Verrohrung (621, 623, 624, 625, 626, 627, 628) im Getriebegehäuse verbindbar ist,
und/oder dass
wobei die Schmierölpumpe (1, 10. 70a, 70b, 620) über eine externe Verrohrung mit einem externen Ölkreislauf verbindbar ist.

10. Getriebe (15) nach mindestens einem der vorangegangenen Ansprüche,
**dadurch gekennzeichnet, dass**
die Schmierölpumpe (1, 10, 70a, 70b, 620) zwei interne Anschlüsse erster Art (56a, 56b) aufweist, deren Öffnungen auf das Getriebegehäuse (601; 602) hin weisen, zwei externe Anschlüsse erster Art (34a, 34b) aufweist, deren Öffnungen parallel zur Gehäuseoberfläche weisen, einen internen Anschluss zweiter Art (54) aufweist, dessen Öffnung auf das Gelriebegehäuse (601, 602) hin weist, und einen externen Anschluss zweiter Art (36) aufweist, dessen Öffnung parallel zur Gehäuseoberfläche weist.

11. Getriebe (15) nach mindestens einem der vorangegangenen Ansprüche,
**dadurch gekennzeichnet, dass**
die internen Anschlüsse (54, 56a, 56b) der Schmierölpumpe (1, 10, 70a, 70b, 620) in axiale Richtung in Bezug auf die Welle (24, 603, 604, 605) der Schmierölpumpe (1, 10, 70a, 70b, 620) weisen
und die externen Anschlüsse (34a, 34b, 36) der Schmierölpumpe (1, 10, 70a, 70b, 620) in
radiale Richtung in Bezug auf die Welle (24, 603, 604, 605) der Schmierölpumpe (1, 10, 70a, 70b, 620) weisen,
und/oder dass
das Filter ein Vlies umfasst.

12. Getriebe-Baureihe, umfassend Varianten,
wobei in einer ersten Variante eine Schmierölpumpe (1, 10, 70a, 70b, 620) an einem ersten Ende einer Welle (24, 603, 604, 605) des Getriebes (15) angeordnet ist und durch die Welle (24, 603; 604, 605) des Getriebes (15) angetrieben wird,
und in einer zweiten Variante die Schmierölpumpe (1, 10, 70a, 70b, 620) an einem zweiten Ende der Welle (24, 603, 604, 605) des Getriebes (15) angeordnet ist und durch diese Welle (24, 603, 604, 605) des Getriebes (15) angetrieben wird,
wobei die Schmierölpumpe (1, 10, 70a, 70b, 620) jeweils an eine Ölkreislauf-Verrohrung (621, 623, 624, 625, 626, 627, 628) im Getriebeinneren angeschlossen ist,
**dadurch gekennzeichnet,**
**dass** die Schmierölpumpe (1, 10, 70a, 70b, 620) einen ersten Anschluss erster Art (56a, 56b) und einen zweiten Anschluss erster Art (56a, 56b) aufweist, die derart symmetrisch zueinander angeordnet sind, dass bei der ersten Variante die Schmierölpumpe (1, 10, 70a, 70b, 620) auf einer ersten Seite des Getriebes (15) montiert ist, wobei der erste Anschluss erster Art (56a, 56b) mit dem im Getriebeinneren vorgesehenen Rohrleitungssystem (621, 623, 624, 625, 626, 627, 628) verbunden ist und der zweite Anschluss erster Art (56a, 56b) verschlossen ist, und dass bei der zweiten Variante die Schmierölpumpe (1, 10, 70a, 70b, 620) auf einer zweiten Seiten des Getriebes (15) montiert ist, wobei der zweite Anschluss erster Art (56a, 56b) mit einem im Getriebeinneren vorgesehenen Rohrleitungssystem (621, 623, 624, 625, 626, 627, 628) verbunden ist und der erste Anschluss erster Art (56a, 56b) verschlossen ist.

13. Getriebe-Baureihe nach dem vorangegangenen Anspruch,
**dadurch gekennzeichnet, dass**
in der ersten Variante oder der zweiten Variante die Schmierölpumpe (1, 10, 70a, 70b, 620) an einem Deckel (16, 21) des Getriebegehäuses (601, 602) vorgesehen ist, wobei der Deckel ein Lager einer Welle (24, 603, 604, 605) des Getriebes (15), insbesondere der eintreibenden Welle (603), abdeckt und die Pumpe (1, 10, 70a, 70b, 620) über den Deckel (16, 21) an eine Ölkreislauf-Verrohrung im Getriebeinneren angeschlossen ist,
und wobei in einer weiteren Variante die Schmierölpumpe (1, 10, 70a, 70b, 620) an einem Deckel (16, 21) des Getriebegehäuses (601, 602) vorgesehen ist, wobei die Schmierölpumpe (1, 10, 70a, 70b, 620) an ein externes Verrohrungssystem angeschlossen ist,
und/oder dass
in einer monobloc-Varlante der ersten oder zweiten Variante das Getriebegehäuse in monobloc-Bauweise ausgeführt ist,
in einer zweiteiligen Variante der ersten oder zweiten Variante das Getriebegehäuse (601, 602) mindestens zweiteilig ausgeführt ist,
wobei in beiden Varianten eine interne Ölkreislauf-Verrohrung (621, 623, 624, 625, 626, 627, 628) vorgesehen ist
und wobei die Getriebegehäuse (601, 602) der beiden Varianten im Wesentlichen identisch ausgeformt sind, wobei die Unterschiede zwischen den Getriebegehäusen (601, 602, 627, 628) der monobloc-Variante einerseits und der zweiteiligen Variante andererseits nur durch die zweiteilige Ausführung der zweiteiligen Variante begründet sind.

14. Verfahren zum Herstellen von Varianten einer Getriebe-Baureihe nach Anspruch 13 oder 14,
**dadurch gekennzeichnet, dass**
eine Schmierölpumpe (1, 10, 70a, 70b, 620) an einer Getriebewelle (24, 603, 604, 605) zur Bildung eines Getriebes (15) nach einem der Ansprüche 1 bis 12, montiert
wird.

## Claims

1. A transmission (15) with a lubricating-oil pump (1, 10, 70a, 70b, 620),
wherein a shaft (24, 603, 604, 605) of the transmission (15) is a shaft (603) which drives the lubricating-oil pump (1, 10, 70a, 70b, 620), in particular that [sic] the shaft (24, 603, 604, 605) of the lubricating-oil pump (1, 10, 70a, 70b, 620) is arranged coaxially to a shaft (24, 603, 604, 605) which is encompassed by a stage of the transmission (15), in particular is encompassed by the transmission train which connects an input and an output shaft (603, 605) of the transmission (15),
**characterised in that**
the lubricating-oil pump (1, 10, 70a, 70b, 620) has a first connection of first type (56a, 56b) and a second connection of first type (56a, 56b), which are arranged symmetrically to each other such that upon mounting the lubricating-oil pump (1, 10, 70a, 70b, 620) on a first side of the transmission (15) the first connection of first type (56a, 56b) is connected to the pipe system (621, 623, 624, 625, 626, 627, 628) provided in the interior of the transmission, the second connection of first type (56a, 56b) being closed, and **in that**
upon mounting the lubricating-oil pump (1, 10, 70a, 70b, 620) on a second side of the transmission (15) the second connection of first type (56a, 56b) is connected to a pipe system (621, 623, 624, 625, 626, 627, 628) provided in the interior of the transmission, the first connection of first type (56a, 56b) being closed.

2. A transmission (15) according to Claim 1 or 2 [sic],
**characterised in that**
the lubricating-oil pump (1, 10, 70a, 70b, 620) is mounted on a casing cover of the transmission (15),
the casing cover (16, 21) at least partially covering a bearing for the shaft (24, 603, 604, 605) of the transmission (15).

3. A transmission (15) according to at least one of the preceding claims,
**characterised in that**
the shaft (24, 603, 604, 605) of the transmission (15) is the input shaft (603) or the first intermediate shaft (604),
and/or **in that**
the lubricating-oil pump (1, 10, 70a, 70b, 620) is connected via the casing cover (16, 21) to an oil-circuit pipework system (621, 623, 624, 625, 626, 627, 628),
and/or **in that**
the lubricating-oil pump (1, 10, 70a, 70b, 620) is connected to a distributor (4, 11) to which at least a first sensor (2, 3, 13, 14) is connected.

4. A transmission (15) according to at least one of the preceding claims,
**characterised in that**
the first sensor (2, 3, 13, 14) is a flow monitor and/or a pressure switch
and/or
**in that** a filter and/or a second sensor (2, 3, 13, 14), in particular for monitoring the filter, is connected to the distributor (4, 11).

5. A transmission (15) according to at least one of the preceding claims,
**characterised in that**
the lubricating-oil pump (1, 10, 70a, 70b, 620) is connected by its pump flange to the transmission (15), with in particular the shaft (24, 603, 604, 605) of the lubricating-oil pump (1, 10, 70a, 70b, 620) being arranged coaxially with a shaft (24, 603, 604, 605) of the transmission (15),
and/or **in that**
at least one suction connection (36, 54) and at least one pressure connection (34a, 34b, 56a, 56b) of the lubricating-oil pump (1, 10, 70a, 70b, 620) is connected to the pipe system (621, 623, 624, 625, 626, 627, 628) provided in the interior of the transmission (15), in particular to an internal oil-circuit pipework system,
and/or **in that**
the pressure outlet (34a, 34b) points in the axial direction with regard to the axis of the shaft (24, 603, 604, 605) of the lubricating-oil pump (1, 10, 70a, 70b, 620).

6. A transmission (15) according to at least one of the preceding claims,
**characterised in that**
a sensor (2, 3, 13, 14) is connected by means of electric lines to an electronic circuit, in particular for evaluating the sensor signals,
and/or **in that**
lubricating-oil pumps (1, 10, 70a, 70b, 620) of axially different lengths can be connected to the pump flange,
and/or **in that**
the lubricating-oil pump (1, 10, 70a, 70b, 620) has a pumping direction which is independent of the direction of rotation of the shaft (24, 603, 604, 605) of the lubricating-oil pump (1, 10, 70a, 70b, 620).

7. A transmission (15) according to at least one of the preceding claims,
**characterised in that**
the lubricating-oil pump (1, 10, 70a, 70b, 620) has a first connection of first type (56a, 56b) and a second connection of first type (56a, 56b), which are arranged symmetrically to one another such that upon mounting the lubricating-oil pump (1, 10, 70a, 70b, 620) on a first side of the transmission (15) the first connection of first type (56a, 56b) is connected to the pipe system (621, 623, 624, 625, 626, 627, 628) provided in the interior of the transmission, the second connection of first type (56a, 56b) being closed, and **in that** upon mounting the lubricating-oil pump (1, 10, 70a, 70b, 620) on a second side of the transmission (15) the second connection of first type (56a, 56b) is connected to a pipe system (621, 623, 624, 625, 626, 627, 628) provided in the interior of the transmission, the first connection of first type (56a, 56b) being closed,
and/or **in that**
the lubricating-oil pump (1, 10, 70a, 70b, 620) has a connection of second type (36, 54) which upon mounting the lubricating-oil pump (1, 10, 70a, 70b, 620) on each of the two sides is connected in each case to the pipe system (621, 623, 624, 625, 626, 627, 628) provided in the interior of the transmission, in particular to an oil-circuit pipework system,
and/or **in that**
the connections of first type (56a, 56b) are pressure connections,
and the connection of second type (36, 54) is a suction connection,
and/or **in that**
the connections of first type are suction connections,
and the connection of second type is a pressure connection.

8. A transmission (15) according to at least one of the preceding claims,
**characterised in that**
the first and second side of the transmission (15) are opposing sides of the transmission (15)
and/or
that the lubricating-oil pump (1, 10, 70a, 70b, 620) upon mounting on the first side and on the second side is connected to the same shaft (24, 603, 604, 605).

9. A transmission (15) according to at least one of the preceding claims,
**characterised in that**
the lubricating-oil pump (1, 10, 70a, 70b, 620) is connected to the transmission (15) via a casing cover (16, 21),
the lubricating-oil pump (1, 10, 70a, 70b, 620) being able to be connected by the casing cover to an internal oil-circuit pipework system (621, 623, 624, 625, 626, 627, 628) in the transmission casing,
and/or **in that**
the lubricating-oil pump (1, 10, 70a, 70b, 620) being [sic] able to be connected to an external oil circuit via an external pipework system.

10. A transmission (15) according to at least one of the preceding claims,
**characterised in that**
the lubricating-oil pump (1, 10, 70a, 70b, 620) has two internal connections of first type (56a, 56b), the openings of which point towards the transmission casing (601, 602), has two external connections of first type (34a, 34b), the openings of which point parallel to the casing surface, has an internal connection of second type (54), the opening of which points towards the transmission casing (601, 602), and has an external connection of second type (36), the opening of which points parallel to the casing surface.

11. A transmission (15) according to at least one of the preceding claims,
**characterised in that**
the internal connections (54, 56a, 56b) of the lubricating-oil pump (1, 10, 70a, 70b, 620) point in the axial direction with regard to the shaft (24, 603, 604, 605) of the lubricating-oil pump (1, 10, 70a, 70b, 620)
and the external connections (34a, 34b, 36) of the lubricating-oil pump (1, 10, 70a, 70b, 620) point in the radial direction with regard to the shaft (24, 603, 604, 605) of the lubricating-oil pump (1, 10, 70a, 70b, 620),
and/or **in that**
the filter comprises a non-woven material.

12. A transmission series, comprising variants,
wherein in a first variant a lubricating-oil pump (1, 10, 70a, 70b, 620) is arranged on a first end of a shaft (24, 603, 604, 605) of the transmission (15) and is driven by the shaft (24, 603, 604, 605) of the transmission (15),
and in a second variant the lubricating-oil pump (1, 10, 70a, 70b, 620) is arranged on a second end of the shaft (24, 603, 604, 605) of the transmission (15) and is driven by this shaft (24, 603, 604, 605) of the transmission (15),
wherein the lubricating-oil pump (1, 10, 70a, 70b, 620) is connected in each case to an oil-circuit pipework system (621, 623, 624, 625, 626, 627, 628) in the interior of the transmission,
**characterised in that**
the lubricating-oil pump (1, 10, 70a, 70b, 620) has a first connection of first type (56a, 56b) and a second connection of first type (56a, 56b), which are arranged symmetrically to one another such that in the first variant the lubricating-oil pump (1, 10, 70a, 70b, 620) is mounted on a first side of the transmission (15), the first connection of first type (56a, 56b) being connected to the pipe system (621, 623, 624, 625, 626, 627, 628) provided in the interior of the transmission and the second connection of first type (56a, 56b) being closed, and **in that** in the second variant the lubricating-oil pump (1, 10, 70a, 70b, 620) is mounted on a second side of the transmission (15), the second connection of first type (56a, 56b) being connected to a pipe system (621, 623, 624, 625, 626, 627, 628) provided in the interior of the transmission, and the first connection of first type (56a, 56b) being closed.

13. A transmission series according to the preceding claim,
**characterised in that**
in the first variant or the second variant, the lubricating-oil pump (1, 10, 70a, 70b, 620) is provided on a cover (16, 21) of the transmission casing (601, 602), the cover covering a bearing of a shaft (24, 603, 604, 605) of the transmission (15), in particular the input shaft (603), and the pump (1, 10, 70a, 70b, 620) being connected via the cover (16, 21) to an oil-circuit pipework system in the interior of the transmission,
and with in a further variant the lubricating-oil pump (1, 10, 70a, 70b, 620) being provided on a cover (16, 21) of the transmission casing (601, 602), the lubricating-oil pump (1, 10, 70a, 70b, 620) being connected to an external pipework system,
and/or **in that**
in a monobloc variant of the first or second variant the transmission casing is designed in a monobloc construction,
in a two-part variant of the first or second variant the transmission casing (601, 602) is designed in at least two parts,
with an internal oil-circuit pipework system (621, 623, 624, 625, 626, 627, 628) being provided in both variants
and with the transmission casings (601, 602) of the two variants being formed substantially identically, the differences between the transmission casings (601, 602, 627, 628) of the monobloc variant on one hand and of the two-part variant on the other hand being accounted for only by the two-part embodiment of the two-part variant.

14. A method for the production of variants of a transmission series according to Claim 13 or 14,
**characterised in that**
a lubricating-oil pump (1, 10, 70a, 70b, 620) is mounted on a transmission shaft (24, 603, 604, 605) for the formation of a transmission (15) according to one of Claims 1 to 12.

## Revendications

1. Transmission (15) munie d'une pompe (1, 10, 70a, 70b, 620) à huile lubrifiante,
sachant qu'un arbre (24, 603, 604, 605) de ladite transmission (15) constitue une arbre (603) qui entraîne ladite pompe (1, 10, 70a, 70b, 620) à huile lubrifiante, l'arbre (24, 603, 604, 605) de ladite pompe (1, 10, 70a, 70b, 620) à huile lubrifiante étant notamment disposé coaxialement à un arbre (24, 603, 604, 605) entouré par un étage de la transmission (15), en particulier par le brin de la transmission qui relie des arbres menant et mené (603, 605) de ladite transmission (15),
**caractérisée par le fait que**
la pompe (1, 10, 70a, 70b, 620) à huile lubrifiante comprend un premier raccord d'un premier type (56a, 56b) et un second raccord d'un premier type (56a, 56b) qui sont agencés symétriquement l'un par rapport à l'autre de façon telle que, lors d'un montage de ladite pompe (1, 10, 70a, 70b, 620) à huile lubrifiante sur un premier côté de la transmission (15), le premier raccord du premier type (56a, 56b) soit relié au système de conduits tubulaires (621, 623, 624, 625, 626, 627, 628) prévu dans l'espace interne de la transmission, le second raccord du premier type (56a, 56b) étant alors obturé ; et que, lors d'un montage de ladite pompe (1, 10, 70a, 70b, 620) à huile lubrifiante sur un second côté de la transmission (15), ledit second raccord du premier type (56a, 56b) soit relié à un système de conduits tubulaires (621, 623, 624, 625, 626, 627, 628) prévu dans l'espace interne de ladite transmission, ledit premier raccord du premier type (56a, 56b) étant alors obturé.

2. Transmission (15) selon la revendication 1,
**caractérisée par le fait que**
la pompe (1, 10, 70a, 70b, 620) à huile lubrifiante est montée sur un couvercle du carter de la transmission (15),
ledit couvercle (16, 21) de carter recouvrant, au moins partiellement, un palier affecté à l'arbre (24, 603, 604, 605) de ladite transmission (15).

3. Transmission (15) selon au moins l'une des revendications précédentes,
**caractérisée par le fait que**
l'arbre (24, 603, 604, 605) de ladite transmission (15) constitue l'arbre menant (603), ou le premier arbre intermédiaire (604) ;
et/ou **par le fait que**
la pompe (1, 10, 70a, 70b, 620) à huile lubrifiante est raccordée, par l'intermédiaire du couvercle (16, 21) du carter, à un réseau tubulaire (621, 623, 624, 625, 626, 627, 628) de circulation d'huile ;
et/ou **par le fait que**
ladite pompe (1, 10, 70a, 70b, 620) à huile lubrifiante est reliée à un répartiteur (4, 11), auquel au moins un premier capteur (2, 3, 13, 14) est connecté.

4. Transmission (15) selon au moins l'une des revendications précédentes,
**caractérisée par le fait que**
le premier capteur (2, 3, 13, 14) est un contrôleur de débit et/ou un interrupteur manométrique ;
et/ou **par le fait**
**qu'**un filtre, et/ou un second capteur (2, 3, 13, 14) notamment dévolu au contrôle dudit filtre, est (sont) raccordé(s) au répartiteur (4, 11).

5. Transmission (15) selon au moins l'une des revendications précédentes,
**caractérisée par le fait que**
la pompe (1, 10, 70a, 70b, 620) à huile lubrifiante est reliée à la transmission (15) par sa bride, sachant notamment que l'arbre (24, 603, 604, 605) de ladite pompe (1, 10, 70a, 70b, 620) à huile lubrifiante est disposé coaxialement à un arbre (24, 603, 604, 605) de ladite transmission (15) ;
et/ou **par le fait**
**qu'**au moins un raccord d'aspiration (36, 54) et au moins un raccord de pression (34a, 34b, 56a, 56b) de ladite pompe (1, 10, 70a, 70b, 620) à huile lubrifiante sont reliés au système de conduits tubulaires (621, 623, 624, 625, 626, 627, 628) prévu dans l'espace interne de ladite transmission (15), en particulier à un réseau tubulaire intérieur de circulation d'huile ;
et/ou **par le fait que**
la sortie de pression (34a, 34b) est orientée dans le sens axial vis-à-vis de l'axe dudit arbre (24, 603, 604, 605) de ladite pompe (1, 10, 70a, 70b, 620) à huile lubrifiante.

6. Transmission (15) selon au moins l'une des revendications précédentes,
**caractérisée par le fait**
**qu'**un capteur (2, 3, 13, 14) est connecté à un circuit électronique au moyen de conducteurs électriques, notamment en vue de l'interprétation des signaux dudit capteur ; et/ou par le fait que
des pompes (1, 10, 70a, 70b, 620) à huile lubrifiante, différemment longues dans le sens axial, peuvent être reliées à la bride dévolue auxdites pompes ;
et/ou par le fait que
la pompe (1, 10, 70a, 70b, 620) à huile lubrifiante présente une direction de pompage indépendante du sens de rotation de l'arbre (24, 603, 604, 605) de ladite pompe (1, 10, 70a, 70b, 620) à huile lubrifiante.

7. Transmission (15) selon au moins l'une des revendications précédentes,
**caractérisée par le fait que**
la pompe (1, 10, 70a, 70b, 620) à huile lubrifiante comprend un premier raccord d'un premier type (56a, 56b) et un second raccord d'un premier type (56a, 56b) qui sont agencés symétriquement l'un par rapport à l'autre de façon telle que, lors d'un montage de ladite pompe (1, 10, 70a, 70b, 620) à huile lubrifiante sur un premier côté de la transmission (15), le premier raccord du premier type (56a, 56b) soit relié au système de conduits tubulaires (621, 623, 624, 625, 626, 627, 628) prévu dans l'espace interne de la transmission, le second raccord du premier type (56a, 56b) étant alors obturé ; et que, lors d'un montage de ladite pompe (1, 10, 70a, 70b, 620) à huile lubrifiante sur un second côté de la transmission (15), ledit second raccord du premier type (56a, 56b) soit relié à un système de conduits tubulaires (621, 623, 624, 625, 626, 627, 628) prévu dans l'espace interne de ladite transmission, ledit premier raccord du premier type (56a, 56b) étant alors obturé ;
et/ou **par le fait que**
ladite pompe (1, 10, 70a, 70b, 620) à huile lubrifiante comporte un raccord d'un second type (36, 54) qui, lors d'un montage de ladite pompe (1, 10, 70a, 70b, 620) à huile lubrifiante sur chacun des deux côtés, est respectivement relié au système de conduits tubulaires (621, 623, 624, 625, 626, 627, 628) prévu dans l'espace interne de ladite transmission, en particulier à un réseau tubulaire de circulation d'huile ;
et/ou **par le fait que**
les raccords du premier type (56a, 56b) sont des raccords de pression et le raccord du second type (36, 54) est un raccord d'aspiration ;
et/ou **par le fait que**
lesdits raccords du premier type sont des raccords d'aspiration
et ledit raccord du second type est un raccord de pression.

8. Transmission (15) selon au moins l'une des revendications précédentes,
**caractérisée par le fait que**
des premier et second côtés de la transmission (15) sont des côtés de ladite transmission (15) qui sont tournés à l'opposé ;
et/ou **par le fait**
**que** la pompe (1, 10, 70a, 70b, 620) à huile lubrifiante est reliée au même arbre (24, 603, 604, 605) lors d'un montage sur ledit premier côté et sur ledit second côté.

9. Transmission (15) selon au moins l'une des revendications précédentes,
**caractérisée par le fait que**
la pompe (1, 10, 70a, 70b, 620) à huile lubrifiante est reliée à ladite transmission (15) par l'intermédiaire d'un couvercle (16, 21) de carter,
ladite pompe (1, 10, 70a, 70b, 620) à huile lubrifiante pouvant être reliée, par l'intermédiaire dudit couvercle de carter, à un réseau tubulaire intérieur (621, 623, 624, 625, 626, 627, 628) de circulation d'huile qui est situé dans l'espace interne de ladite transmission ;
et/ou **par le fait que**
ladite pompe (1, 10, 70a, 70b, 620) à huile lubrifiante peut être reliée à un circuit d'huile extérieur par l'intermédiaire d'un réseau tubulaire extérieur.

10. Transmission (15) selon au moins l'une des revendications précédentes, **caractérisée par le fait que**
la pompe (1, 10, 70a, 70b, 620) à huile lubrifiante comprend deux raccords intérieurs d'un premier type (56a, 56b), dont les ouvertures pointent vers le carter (601, 602) de ladite transmission ; deux raccords extérieurs d'un premier type (34a, 34b), dont les ouvertures sont orientées parallèlement à la surface dudit carter ; un raccord intérieur d'un second type (54), dont l'ouverture pointe vers ledit carter (601, 602) de la transmission ; et un raccord extérieur d'un second type (36), dont l'ouverture est orientée parallèlement à la surface dudit carter.

11. Transmission (15) selon au moins l'une des revendications précédentes,
**caractérisée par le fait que**
les raccords intérieurs (54, 56a, 56b) de la pompe (1, 10, 70a, 70b, 620) à huile lubrifiante sont orientés dans une direction axiale vis-à-vis de l'arbre (24, 603, 604, 605) de ladite pompe (1, 10, 70a, 70b, 620) à huile lubrifiante,
et les raccords extérieurs (34a, 34b, 36) de ladite pompe (1, 10, 70a, 70b, 620) à huile lubrifiante sont orientés dans une direction radiale vis-à-vis dudit arbre (24, 603, 604, 605) de la pompe (1, 10, 70a, 70b, 620) à huile lubrifiante ;
et/ou **par le fait que**
le filtre comprend un non-tissé.

12. Gamme de transmissions incluant des variantes,
sachant que, dans une première variante, une pompe (1, 10, 70a, 70b, 620) à huile lubrifiante est disposée à une première extrémité d'un arbre (24, 603, 604, 605) de la transmission (15), et est entraînée par ledit arbre (24, 603, 604, 605) de la transmission (15)
et que, dans une deuxième variante, ladite pompe (1, 10, 70a, 70b, 620) à huile lubrifiante est disposée à une seconde extrémité dudit arbre (24, 603, 604, 605) de la transmission (15), et est entraînée par cet arbre (24, 603, 604, 605) de la transmission (15),
ladite pompe (1, 10, 70a, 70b, 620) à huile lubrifiante étant raccordée, à chaque fois, à un réseau tubulaire (621, 623, 624, 625, 626, 627, 628) de circulation d'huile qui est situé dans l'espace interne de ladite transmission,
**caractérisée par le fait**
**que** la pompe (1, 10, 70a, 70b, 620) à huile lubrifiante comprend un premier raccord d'un premier type (56a, 56b) et un second raccord d'un premier type (56a, 56b) qui sont agencés symétriquement l'un par rapport à l'autre de façon telle que, dans la première variante, ladite pompe (1, 10, 70a, 70b, 620) à huile lubrifiante soit montée sur un premier côté de la transmission (15), le premier raccord du premier type (56a, 56b) étant alors relié au système de conduits tubulaires (621, 623, 624, 625, 626, 627, 628) prévu dans l'espace interne de la transmission, et le second raccord du premier type (56a, 56b) étant obturé ; et que, dans la deuxième variante, ladite pompe (1, 10, 70a, 70b, 620) à huile lubrifiante soit montée sur un second côté de la transmission (15), ledit second raccord du premier type (56a, 56b) étant alors relié à un système de conduits tubulaires (621, 623, 624, 625, 626, 627, 628) prévu dans l'espace interne de la transmission, et ledit premier raccord du premier type (56a, 56b) étant obturé.

13. Gamme de transmissions selon la revendication précédente,
**caractérisée par le fait que**,
dans la première variante ou la deuxième variante, la pompe (1, 10, 70a, 70b, 620) à huile lubrifiante est prévue sur un couvercle (16, 21) du carter (601, 602) de la transmission, sachant que ledit couvercle recouvre un palier d'un arbre (24, 603, 604, 605) de ladite transmission (15), en particulier de l'arbre menant (603), et que ladite pompe (1, 10, 70a, 70b, 620) est raccordée, par l'intermédiaire dudit couvercle (16, 21), à un réseau tubulaire de circulation d'huile qui est situé dans l'espace interne de ladite transmission,
et sachant que, dans une variante supplémentaire, ladite pompe (1, 10, 70a, 70b, 620) à huile lubrifiante est prévue sur un couvercle (16, 21) dudit carter (601, 602) de la transmission, ladite pompe (1, 10, 70a, 70b, 620) à huile lubrifiante étant raccordée à un système extérieur de conduits tubulaires ;
et/ou **par le fait que**,
dans une version monobloc de ladite première ou deuxième variante, le carter de la transmission est d'un type de réalisation monobloc,
dans une version de ladite première ou deuxième variante composée de deux parties, ledit carter (601, 602) de la transmission est réalisé en au moins deux parties,
un réseau tubulaire intérieur (621, 623, 624, 625, 626, 627, 628) de circulation d'huile étant prévu dans les deux versions,
et les carters (601, 602) des transmissions des deux versions offrant des configurations pour l'essentiel identiques, les différences entre .les carters (601, 602, 627, 628) des transmissions de la version monobloc, d'une part, et de la version composée de deux parties, d'autre part, étant fondées uniquement sur la réalisation en deux parties de ladite version composée de deux parties.

14. Procédé de fabrication de variantes d'une gamme de transmissions conforme à la revendication 13 ou 14,
**caractérisé par le fait**
**qu'**une pompe (1, 10, 70a, 70b, 620) à huile lubrifiante est montée sur un arbre (24, 603, 604, 605) de transmission, en vue de former une transmission (15) conforme à l'une des revendications 1 à 12.
